# EUROPÄISCHE PATENTSCHRIFT

(11) **EP 2 737 322 B1**
(45) Veröffentlichungstag und Bekanntmachung des Hinweises auf die Patenterteilung: **02.09.2015**
(21) Anmeldenummer: 12769959.3
(22) Anmeldetag: 05.09.2012
(51) Int. Cl.: G01P 3/44, G01P 3/46, G01L 1/12, G01L 3/10

(54) **VERFAHREN UND ANORDNUNG ZUR BESTIMMUNG DER ROTATIONSGESCHWINDIGKEIT VON FERROMAGNETISCHEN BAUTEILEN**
METHOD AND ASSEMBLY FOR DETERMINING THE ROTATIONAL SPEED OF FERROMAGNETIC COMPONENTS
PROCÉDÉ ET ENSEMBLE PERMETTANT DE DÉTERMINER LA VITESSE DE ROTATION D'ÉLÉMENTS FERROMAGNÉTIQUES

(30) Priorität: 30.09.2011 DE 102011083857
(43) Veröffentlichungstag der Anmeldung: 04.06.2014
(73) Patentinhaber: Siemens Aktiengesellschaft, 80333 München (DE)
(72) Erfinder: MAIER, Carl Udo, 70499 Stuttgart (DE); OSTERMAIER, Jochen, 91056 Erlangen (DE)
(86) Internationale Anmeldenummer: PCT/EP2012/067322
(87) Internationale Veröffentlichungsnummer: WO 2013/045247

(56) Entgegenhaltungen:
- DE-A1- 3 624 846
- DE-A1-102008 056 913
- US-A- 5 195 377
- US-A1- 2004 134 266
- US-A1- 2006 186 875

## Beschreibung

Die Erfindung betrifft ein Verfahren zur Bestimmung der Rotationsgeschwindigkeit sowie weiterer Parameter von ferromagnetischen, drehenden Bauteilen, insbesondere Scheiben oder Wellen. Weiterhin wird eine entsprechende Anordnung zur Durchführung des Verfahrens beschrieben.

An drehenden Scheiben wie z. B. Schwungscheiben, Bremsscheiben oder ähnlich schnell drehenden Bauteilen kann aufgrund der auftretenden radial gerichteten Kräfte beim Beschleunigen oder beim Abbremsen ein Schadensfall auftreten. Dabei ist die Kenntnis der Drehzahl oder besser die Kenntnis der auftretenden Kräfte in der Scheibe sehr hilfreich. Mit dieser Kenntnis kann das Umfeld skizziert werden, bei dem der Schadensfall auftritt. Darüber hinaus kann auch eine Überwachung, eine Regelung oder eine Optimierung des Systems erfolgen.

Für die Feststellung der Winkel- oder Rotationsgeschwindigkeit an Scheiben werden bisher Markierungen auf den Scheiben verwendet, welche durch geeignete Sensoren ausgelesen werden können. Anhand der Häufigkeit der vorbeilaufenden Markierungen kann in Folge die Geschwindigkeit errechnet werden.

Die bei der Rotation hervorgerufenen Kräfte können mit solchen Systemen allerdings nicht gemessen werden.

Dehnungsmessstreifen/DMS bieten eine Möglichkeit, über ein bestimmtes Verfahren Kräfte in einem Werkstück zu ermitteln. Dies ist jedoch mit dem Nachteil verbunden, dass ein DMS auf die Scheibe aufgeklebt wird und die Sensordaten über einen Transponder abgeholt werden müssen. Mit diesem Verfahren ist lediglich eine grobe Bestimmung der Rotationsgeschwindigkeit möglich, welche auf Veränderungen nicht schnell reagiert.

Der Erfindung liegt die Aufgabe zugrunde, ein Verfahren und eine Anordnung zur Verfügung zu stellen, womit ohne Anpassungen des Messobjektes die Rotationsgeschwindigkeit und/oder die Drehzahl von rotierenden Bauteilen, wie Scheiben, vermessen bzw. berechnet werden kann.

Die Lösung dieser Aufgabe geschieht durch die jeweilige Merkmalskombination eines unabhängig formulierten Patentanspruchs.

Der Erfindung liegt die Erkenntnis zugrunde, dass ein berührungslos arbeitender magnetoelastischer Kraftsensor an der Front- bzw. Stirnseite, einer zu vermessenden ferromagnetischen Scheibe bzw. einem Bauteil platziert wird und parallel zu deren Drehachse orientiert ist, wobei eine Messung der Rotationsgeschwindigkeit sich aus den Messungen der Permeabilitätsänderungen in der Scheibe ergeben. Die höchste Empfindlichkeit des Sensors wird möglichst so eingestellt, dass Radialkräfte gemessen werden.

Durch die Rotation der Scheibe treten Radialkräfte auf, welche von dem Kraftsensor erfasst werden können. Diese Kräfte können beispielsweise Zentrifugal- bzw. Zentripedalkräfte sein. Vorteilhaft platziert wird der Sensor im Randbereich der Scheibe, wo aufgrund der hohen Umlaufgeschwindigkeit die größten Kräfte auftreten. Aus der Größe der gemessenen Kraft kann die Drehgeschwindigkeit errechnet werden.

Da diese Messung grundsätzlich auf Markierungen am Messobjekt nicht angewiesen ist, kann sie mit hoher Auflösung auch kontinuierlich erfolgen. Damit können kleine Schwankungen bei hohen Rotationsgeschwindigkeiten erfasst werden.

Das System ist damit in der Lage, Drehschwingungen zu erfassen.

Wird ein zusätzlicher magnetoelastischer Sensor, eingesetzt, der ebenfalls parallel zur Drehachse ausgerichtet ist und gleichzeitig mit dem ersten Sensor auf die Stirnseite einer rotierenden Scheibe mit Spaltabstand gerichtet ist, so können zusätzlich weitere Kräfte wie Brems- oder Beschleunigungskräfte direkt gemessen oder über eine Resultierende errechnet werden. Dies erfordert, dass die Ausrichtung der hauptsächlichen Empfindlichkeit des zusätzlichen magnetoelastischen Sensors relativ zum mindestens einen Sensor verändert ist, wie angewinkelt, verdreht oder versetzt. Die Anpassung kann durch Verstellung des Sensorkopfes des zusätzlichen magnetoelastischen Sensors geschehen.

Ist die Scheibe unter Umständen nicht aus ferromagnetischem Material, so kann z. B. eine ferromagnetische Schicht aufgebracht werden. Wird keine kontinuierliche Messung benötigt, so kann das ferromagnetische Schichtmaterial lediglich partiell aufgebracht werden.

Im Folgenden wird anhand der begleitenden Figuren ein Ausführungsbeispiel beschrieben.

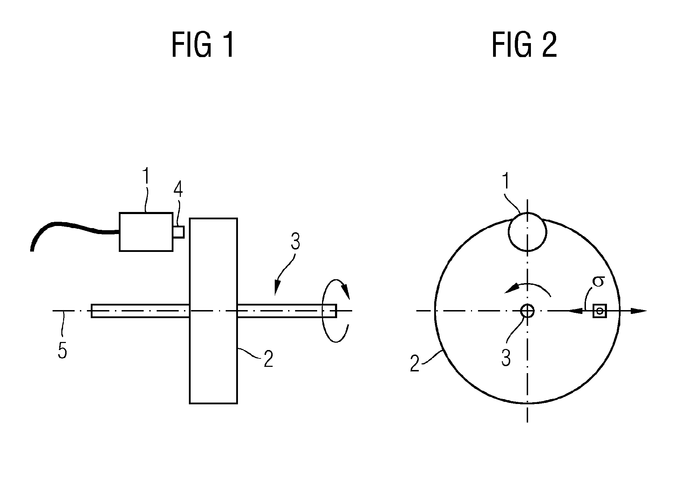

- Figur 1 zeigt: ein System zur Erfassung einer Drehzahl anhand von radial im Werkstück bzw. der Scheibe 2 auftretenden Spannungen,
- Figur 2 zeigt: eine Darstellung entsprechend Figur 1 in Richtung der Welle 3 betrachtet.

Die Scheibe mit ihrer Front- bzw. Stirnseite ist großflächig dargestellt, der magneto-elastische Sensor 1 ist am äußeren Umfang der Scheibe 2 positioniert und parallel zur Drehachse 5 ausgerichtet. Skizziert sind eine Welle 3 sowie die im Bauteil bzw. in der Scheibe 2 auftretende Kräfte σ, deren Auswertung auf die Rotationsgeschwindigkeit der Scheibe zurückschließen lässt. Der magnetoelastische Sensor 1 weist einen einstellbaren Sensorkopf 4 auf.

Die Permeabilität ferromagnetischer Materialien wird durch mechanische Spannungen beeinflusst. Dieser physikalische Effekt, der als magnetoelastischer Effekt bekannt ist, kann zum Messen von Drehmomenten in einem rotierenden Objekt herangezogen werden. Dabei erzeugt ein Drehmoment Spannungen in dem rotierenden Objekt. Die Erfassung von Drehmomenten mittels magnetoelastischer Sensoren zeichnet sich durch hohe Genauigkeit aus, wobei eine Nachkalibrierung ebenso wenig erforderlich ist wie das Anfahren von Referenzmarken.

Ein magnetoelastischer Drehmomentsensor, der zum Messen des Drehmomentes von Antriebswellen zum Einsatz kommt, ist beispielsweise aus der DE 10 2009 008 074 A1 bekannt. In diesem Dokument ist eine Messanordnung zum Erfassen von Drehmomenten einer Welle beschrieben, welche einen mit einem vorbestimmten Spaltabstand von der Oberfläche der Welle positionierten Drehmomentsensor umfasst.

Zur Messung von Drehmomenten an Kraft übertragenden Wellen in Maschinen wird in einem geringen Abstand von der Oberfläche der Welle kontaktlos mindestens eine elektromagnetische Spule angeordnet, welche auf die Veränderung der Permeabilität in einer ferromagnetischen Schicht auf der Welle oder einer an sich ferromagnetischen Welle mit einer Signaländerung reagiert. Hierzu muss die Welle Torsionsspannungen ausgesetzt sein.

Der magnetoelastische Drehmomentsensor muss entlang der Welle zwischen einem antreibenden Drehmoment und dem ihm entgegengesetzt wirkenden Reaktions-Drehmoment angeordnet sein.

Ein Sensor bzw. ein Sensorsystem entsprechend der Erfindung, erlaubt es, ohne Veränderung des Messobjektes, Drehzahlen und Kräfte zu messen, wie sie beispielsweise beim Bremsen oder Beschleunigen auftreten. Die berührungslose Messung kann vorteilhafterweise auch kontinuierlich ausgeführt werden. Dabei muss am Messobjekt nicht codiert oder anderweitig angepasst werden. Des Weiteren kann eine schnell drehende Scheibe wie beispielsweise ein Schwungrad zur Energiespeicherung eingesetzt und überwacht werden.

Aufgrund des berührungslosen Messprinzips eignet sich das vorgestellte System zur Nachrüstung an bestehenden Anlagen. Eine Drehzahl kann auch aus anderen Parametern berechnet werden. Ein magneto-elastischer Sensor 1, der eine Messung an einer mit hoher Drehzahl rotierenden Scheibe durchführt, kann Radialkräfte an bestimmten Positionen bzw. deren Änderung aufnehmen und daraus weitere Parameter bestimmen.

Damit kann ein Verfahren bzw. eine Anordnung entsprechend der Erfindung zur Optimierung und Überwachung von Scheiben allgemein eingesetzt werden. Aufgrund des berührungslosen Messprinzips eignet sich dieses System für einen vielseitigen Einsatz an bestehenden Anlagen.

Es kann insbesondere eine Aussage über eine noch zu verbleibende Lebensdauer eines Bauteils oder einer Maschine getroffen werden. Weiterhin kann die Entscheidung über eine Notabschaltung, bevor größerer Schaden entsteht, getroffen werden.

## Patentansprüche

1. Verfahren zur Bestimmung der Rotationsgeschwindigkeit von ferromagnetischen Bauteilen (2) durch die Detektion von Permeabilitätsänderungen in Abhängigkeit von radial gerichteten Kräften (sigma) in dem Bauteil, wobei mindestens ein berührungslos arbeitender magnetoelastischer Sensor (1) auf eine Stirnseite des zu messenden ferromagnetischen Bauteils (2) parallel zur Drehachse ausgerichtet wird, durch die Rotation des Bauteils (2) auftretende Radialkräfte durch die Erfassung von zugeordneten Permeabilitätsänderungen im Bauteil (2) mittels des Sensors (1) gemessen werden und aus der Größe der Radialkräfte die Drehgeschwindigkeit errechnet wird.

2. Verfahren nach Anspruch 1, wobei der mindestens eine magnetoelastische Sensor (1) im radial äußeren Randbereich des Bauteils (2) positioniert wird.

3. Verfahren nach einem der vorhergehenden Ansprüche, wobei mindestens ein zusätzlicher magnetoelastischer Sensor (1) eingesetzt wird, welcher gleichzeitig mit dem ersten Sensor auf die Stirnseite eines rotierenden Bauteils gerichtet wird und dessen hauptsächliche Ausrichtung der Empfindlichkeit in einem bestimmten Winkel zu der des mindestens einen magnetoelastischen Sensors angestellt ist.

4. Verfahren nach einem der vorhergehenden Ansprüche, wobei Beschleunigungskräfte an einer rotierenden Scheibe (2) gemessen und/oder berechnet werden.

5. Verfahren nach einem der vorhergehenden Ansprüche, wobei ein Bauteil (2) zumindest partiell mit einer ferromagnetischen Schicht versehen wird.

6. Sensoranordnung zur Bestimmung der Rotationsgeschwindigkeit von rotierenden, ferromagnetischen Bauteilen, wie Scheiben oder Wellen, mittels der Durchführung eines Verfahrens entsprechend einem der vorangehenden Ansprüche, mit einem auf einer Welle (3) rotierenden Bauteil oder einer Scheibe, mit mindestens einem magnetoelastischen Sensor (1), der auf eine Stirnseite des Bauteils oder der Scheibe (2) parallel zur Drehachse ausgerichtet positioniert ist, derart, dass durch die Rotation des Bauteils (2) auftretende Radialkräfte in dem Bauteil durch die Erfassung von zugeordneten Permeabilitätsänderungen im Bauteil mit Hilfe des Sensors (1) messbar sind, sowie mit Mitteln zum Errechnen der Drehgeschwindigkeit aus der Größe der Radialkräfte.

7. Sensoranordnung nach Anspruch 6, wobei die Positionierung an Schwungscheiben, Schwungräder, Bremsscheiben, zu deren Überwachung, vorgesehen ist.

## Claims

1. Method for determining the rotational speed of ferromagnetic components (2) by detecting permeability changes as a function of radially aligned forces (sigma) in the component, wherein, at least one contactless-operating magnetoelastic sensor (1) is aligned toward a face of the ferromagnetic component (2) to be measured in parallel with the axis of rotation, radial forces occurring by rotating the component (2) are measured by detecting assigned permeability changes in the component (2) by means of the sensor (1), and the rotational speed is calculated from the extent of the radial forces.

2. Method according to claim 1, wherein the at least one magnetoelastic sensor (1) is positioned in the radial outer border area of the component (2).

3. Method according to one of the preceding claims, wherein at least one additional magnetoelastic sensor (1) is used, which, simultaneously with the first sensor, is directed toward the face of a rotating component and the primary alignment of the sensitivity of which is set at a specific angle relative to that of the at least one magnetoelastic sensor.

4. Method according to one of the preceding claims, wherein acceleration forces are measured and/or calculated on a rotating disk (2).

5. Method according to one of the preceding claims, wherein a component (2) is provided at least partially with a ferromagnetic layer.

6. Sensor arrangement for determining the rotational speed of rotating, ferromagnetic components, such as disks or shafts, by means of implementing a method according to one of the preceding claims, having a component or disk rotating on a shaft (3), having at least one magnetoelastic sensor (1) which is positioned aligned in parallel with the axis of rotation on a face of the component or the disk (2), such that radial forces in the component occurring by rotating the component (2) can be measured by detecting assigned permeability changes in the component (2) by means of the sensor (1), and having means for calculating the rotational speed from the extent of the radial forces.

7. Sensor arrangement according to claim 6, wherein positioning on disk flywheels, flywheels, brake disks, for their monitoring, is provided.

## Revendications

1. Procédé de détermination de la vitesse de rotation de pièces (2) ferromagnétiques en détectant des variations de perméabilité en fonction de forces (sigma) dirigées radialement dans la pièce, dans lequel on dirige parallèlement à l'axe de rotation un capteur (1) magnétoélastique fonctionnant sans contact sur un côté frontal de la pièce (2) ferromagnétique à mesurer, on mesure des forces radiales se produisant par la rotation de la pièce (2) en détectant des variations de perméabilité associées de la pièce au moyen du capteur (1) et on calcule la vitesse de rotation à partir de la valeur des forces radiales.

2. Procédé suivant la revendication 1, dans lequel on met le au moins un capteur (1) magnétoélastique en position dans la partie de bord extérieure radialement de la pièce (2).

3. Procédé suivant l'une des revendications précédentes, dans lequel on utilise au moins un capteur (1) magnétoélastique supplémentaire, que l'on dirige en même temps que le premier capteur sur le côté frontal d'une pièce tournante et dont l'orientation principale de la sensibilité est réglée dans un angle déterminé par rapport au au moins un capteur magnétoélastique.

4. Procédé suivant l'une des revendications précédentes, dans lequel on mesure et/ou on calcule des forces d'accélération sur un disque (2) tournant.

5. Procédé suivant l'une des revendications précédentes, dans lequel on munit une pièce (2) au moins en partie d'une couche ferromagnétique.

6. Agencement de capteur pour déterminer la vitesse de rotation de pièces ferromagnétiques tournantes, comme des disques ou des arbres, en effectuant un procédé suivant l'une des revendications précédentes, comprenant
une pièce ou un disque tournant sur un arbre (3), au moins un capteur (1) magnétoélastique qui est mis en position en étant dirigé parallèlement à l'axe de rotation sur un côté frontal de la pièce ou du disque (2) de manière à pouvoir mesurer des forces radiales dans la pièce se produisant par la rotation de la pièce (1), en détectant des variations de perméabilité associées de la pièce, ainsi que des moyens de calcul de la vitesse de rotation à partir de la valeur des forces radiales.

7. Agencement de capteur suivant la revendication 6, dans lequel la mise en position est prévue sur des volants à disque, des volants, des disques de frein, en vue de leur contrôle.
